# EUROPEAN PATENT SPECIFICATION

(11) **EP 3 061 276 B1**
(45) Date of publication and mention of the grant of the patent: **18.12.2019**
(21) Application number: 14782018.7
(22) Date of filing: 23.09.2014
(51) Int. Cl.: H04W 84/18, H04W 8/00

(54) **DISTRIBUTED DATA TRANSMISSION IN DATA NETWORKS**
VERTEILTE DATENÜBERTRAGUNG IN DATENNETZWERKEN
TRANSMISSION DE DONNÉES DISTRIBUÉE DANS DES RÉSEAUX DE DONNÉES

(30) Priority: 22.10.2013 US 201314059846
(43) Date of publication of application: 31.08.2016
(73) Proprietor: Landis+Gyr Innovations Inc., Alpharetta, Georgia 30022 (US)
(72) Inventor: JACOB, John, Alpharetta, Georgia 30022 (US); JEFFERSON, Darrell, Alpharetta, Georgia 30022 (US)
(74) Representative: Phillips & Leigh LLP
(86) International application number: PCT/US2014/056861
(87) International publication number: WO 2015/060969

(56) References cited:
- US-A1- 2003 227 934
- US-A1- 2013 016 654
- HRISHIKESH GOSSAIN ET AL: "A scalable explicit multicast protocol for MANETs", JOURNAL OF COMMUNICATIONS AND NETWORKS, NEW YORK, NY, USA,IEEE, US, vol. 7, no. 3, 1 September 2005 (2005-09-01), pages 294-306, XP011483650, ISSN: 1229-2370, DOI: 10.1109/JCN.2005.6389814
- POPA J JETCHEVA ITRON N DEJEAN ELSTER SAS R SALAZAR LANDIS+GYR J HUI CISCO K MONDEN D: "Applicability Statement for the Routing Protocol for Low Power and Lossy Networks (RPL) in AMI Networks; draft-ietf-roll-applicability-ami-06.txt", APPLICABILITY STATEMENT FOR THE ROUTING PROTOCOL FOR LOW POWER AND LOSSY NETWORKS (RPL) IN AMI NETWORKS; DRAFT-IETF-ROLL-APPLICABILITY-AMI-06.TXT, INTERNET ENGINEERING TASK FORCE, IETF; STANDARDWORKINGDRAFT, INTERNET SOCIETY (ISOC) 4, RUE DES FALAISE, 1 May 2012 (2012-05-01), pages 1-18, XP015082655, [retrieved on 2012-05-01]
- NICO SAPUTRO ET AL: "A survey of routing protocols for smart grid communications", COMPUTER NETWORKS, ELSEVIER SCIENCE PUBLISHERS B.V., AMSTERDAM, NL, vol. 56, no. 11, 15 March 2012 (2012-03-15), pages 2742-2771, XP028501836, ISSN: 1389-1286, DOI: 10.1016/J.COMNET.2012.03.027 [retrieved on 2012-04-20]

## Description

### Technical Field

This disclosure relates generally to computer software and more particularly relates to distributed data transmission in an RF mesh network or other data network.

### Backeround

Data networks may be used to communicate data among multiple network devices. Data networks may be implemented using a mesh networking topology. In a mesh network, each network device relays data received from other network devices such that the network devices collaborate to propagate the data through the network. An example of a mesh data network is a wireless network in which multiple devices communicate via RF or other wireless communication links.

In some implementations, a wireless network may include limitations on bandwidth that is available for each network device for transmitting data. For cases in which the amount of data to be communicated exceeds the bandwidth limitations, transmitting the data via the mesh network may degrade the performance of the mesh network. For example, multiple network devices may unnecessarily relay the same data, thereby causing inefficient use of limited bandwidth in the data network.

Prior solutions for addressing bandwidth limitations of a data network may involve installing additional network equipment, such as additional nodes of the data network and/or RF transceivers having higher bandwidth. Installing additional network equipment may increase costs and/or complexity associated with a data network.

Systems and methods for improving the efficiency of data communication in mesh networks and other networks are therefore desirable. Hrishikesh Gossain et al. "A scalable explicit multicast protocol for MANETs", Journal of Communications and Networks, New York, NY, USA, IEEE, US, vol. 7, no. 3, 1st September 2005, pages 294 - 306, doi:10.1109/JCN.2005.6389814, ISSN: 1229-2370, discloses a scheme for small group multicasts in mobile ad hoc networks, in which Xcast nodes dynamically decide to become "Xcast Forwarders" (XF), which can reduce header processing overhead and minimize Xcast control traffic.

### Summary

The present invention provides a distribution device as defined in claim 1; a system as defined in claim 4; and a method as defined in claim 10; all for distributed data transmission in an RF mesh network or other data network. An exemplary system includes at least two distribution devices. A first distribution device can receive a first data message that includes a first header and payload data. The first distribution device can determine that the second distribution device is not identified in the first header as receiving the payload data. The first distribution device can generate a second data message based on determining that the second distribution device is not identified in the first header as receiving the payload data. The second data message includes the payload data and the second header. The second header identifies the second distribution device as receiving the payload data. The first distribution device transmits the second data message to the second distribution device.

These illustrative aspects and features are mentioned not to limit or define the invention, but to provide examples to aid understanding of the concepts disclosed in this application. Other aspects, advantages, and features will become apparent after review of the entire application.

### Brief Description of the Figures

These and other features, aspects, and advantages of the present disclosure are better understood when the following Detailed Description is read with reference to the accompanying drawings, where:
Figure 1 is a network diagram illustrating an example system that can utilize distributed data transmission in an RF mesh network or other data network;
Figure 2 is a network diagram illustrating examples of distribution devices that can implement distributed data transmission in a mesh network;
Figure 3 is a network diagram illustrating a distribution device transmitting messages to neighboring distribution devices using distributed data transmission in an RF mesh network or other data network;
Figure 4 is a network diagram illustrating example headers added to the messages transmitted by the distribution device to the neighboring distribution devices;
Figure 5 is a network diagram illustrating distribution devices transmitting additional messages to additional neighboring distribution devices using distributed data transmission in an RF mesh network or other data network;
Figure 6 is a network diagram illustrating example headers added to the additional messages transmitted by the distribution devices to the additional neighboring distribution devices;
Figure 7 is a network diagram illustrating an example of a distribution device receiving a message having a maximum header size;
Figure 8 is a block diagram depicting examples of a network management device and a distribution device for implementing distributed data transmission in an RF mesh network or other data network;
Figure 9 is a flow chart illustrating an example method for distributed data transmission in an RF mesh network or other data network; and
Figure 10 is a flow chart illustrating an example method for distributed data transmission with error verification.

### Detailed Description

Systems and methods are provided for distributed data transmission in an RF mesh network or other data network. Distributed data transmission can allow for more efficient use of bandwidth or other resources in a wireless network. More efficient use of bandwidth or other resources in a wireless network can allow for faster distribution of payload data. Non-limiting examples of payload data include firmware or software updates to be distributed to network devices in communication with one another via a wireless network.

The following non-limiting example is provided to help introduce the general subject matter of the present disclosure. A head-end system or other network management device may access a list of network devices to which payload data is to be transmitted. For example, a head-end system for managing a power distribution network or other resource distribution network (e.g., water, gas, etc.) may access a list of devices such as (but not limited to) concentrators used to communicate with metering devices in the power distribution system. The list may identify concentrators for which firmware or other software is to be upgraded. The head-end system can transmit a firmware update packet to a first concentrator via a wireless RF link. The first concentrator can forward the message to one or more neighboring concentrators. The neighboring concentrators can be concentrators with which the first concentrator has a sufficiently reliable RF communication link. For example, the first concentrator may identify neighboring concentrators that have historically transmitted signals to the first concentrator having a received signal strength indicator ("RSSI") exceeding a pre-determined threshold. The concentrator can forward the message to neighboring concentrators along with a header for tracking which concentrators have received the firmware update packet. The header can include a radio address or other identifier for the concentrators that have received the firmware update packet or that will receive the firmware update packet from the transmitting concentrator. Using the header to track which concentrators have received the firmware update packet can prevent subsequent concentrators from unnecessarily re-transmitting the firmware update packet. Preventing subsequent concentrators from unnecessarily re-transmitting the firmware update packet can increase the available capacity of the data network.

In accordance with some aspects, a system can be provided for distributed data transmission in an RF network or other data network. The system can include at least two distribution devices, such as (but not limited to) concentrator devices used to aggregate data received from metering devices or other terminal devices in a power distribution network. A first distribution device can receive a first data message that includes a first header and payload data. A non-limiting example of payload data is a firmware update or other software update (or a portion thereof) that the distribution device can use to upgrade its firmware or other software. The header can include a list of distribution devices in the RF mesh network that have been selected receive the payload data. The first distribution device can determine that the second distribution device is not identified in the first header as having received or having been selected to receive the payload data. Responsive to determining that the second distribution device is not identified in the first header as having received or having been selected to receive the payload data, the first distribution device can generate a second data message for transmitting the payload data to the second distribution device. The second data message includes the payload data and a second header. The first distribution device can generate the second header by adding an identifier for the second distribution device to the first header. The second data message can include the same payload data as the first data message and a different header than the first data message. Non-limiting examples of identifiers include hardware identifiers, geographic coordinates, network addresses, etc. The second header identifies the second distribution device as receiving the payload data. The first distribution device transmits the second data message to the second distribution device.

The second distribution device can determine whether to continue or cease re-transmission of the payload data in a manner similar to that of the first distribution device. For example, the second distribution device can reference device identifiers included in the header of the received data message to identify that a third distribution device has not received the payload data and that a fourth distribution device has already received the payload data. The second distribution device can generate a third header by adding an identifier for the third distribution device to the second header. The second distribution device can transmit a data message to the third distribution device that includes the payload data and the header with identifiers for the first, second, third, and fourth distribution devices. The second distribution device can omit the fourth distribution device from a list of recipient devices based on the fourth distribution device having already been selected to receive the payload data. Omitting distribution devices that have already received the payload data from a list of recipient devices can reduce or minimize unnecessary data traffic on an RF mesh network or other data network.

As used herein, the term "distribution device" is used to refer to a network device configured for relaying or otherwise transmitting data to other network devices in a data network. A non-limiting example of a distribution device is a concentrator device used to communicate with meters that monitor power consumption in a power distribution network. In some aspects, a distribution device can perform one or more functions in addition to relaying or otherwise transmitting data to other network devices. For example, a distribution device that is a concentrator device can read data from one or more metering devices in a power distribution network. The concentrator device can also distribute data to other concentrator devices. Examples of such data include software updates received from a head-end or other server system via a network management device.

As used herein, the term "network management device" is used to refer to a computing device configured for interfacing with a head-end or other server system that is accessible via a back-haul data network as well as one or more distribution devices accessible via a wireless network. A non-limiting example of a network management device is a collector device for a power distribution system. A collector device may communicate with a control center via the Internet and with concentrator devices via an RF mesh network. A network management device can receive payload data from a head-end or other server system via a back-haul network.

As used herein, the term "payload data" is used to refer to data intended for consumption by a network device receiving the payload data. The payload data can include a portion of a data message that is transmitted throughout a data network from a source device to a destination device without modification by intermediate devices between the source device and destination device. Other portions of the data message, such as a header appended to the payload data for transport through the data network, may be modified by one or more network devices used to communicate the data and/or may be discarded by the destination device. Non-limiting examples of payload data include command messages transmitted to a network device to instruct the network device to perform one or more operations, queries to a network device, firmware updates or other software updates to be applied to the network device, and the like.

As used herein, the term "header" is used to refer to supplemental data included with payload data that can identify one or more characteristics of the payload data and/or one or more characteristics associated the transmission of the payload data.

As used herein, the term "data network" is used to refer to a group of devices interconnected by communication channels that allow sharing of resources and information. A communication channel can include any suitable means for communicating data over a network, such as (but not limited to) a copper cable, a fiber optic cable, a wireless transmission, power line communication, etc.

As used herein, the term "mesh network" is used to refer to a data network in which each node is configured for transmitting and receiving data used by the node as well as for relaying data used by other nodes in order to propagate the data via the data network.

In some aspects, a control unit can receive data to be transmitted to network devices. The control unit can divide the data into multiple data messages, each of which includes payload data. A control unit can include any device or system (e.g., a head-end system, a network management device, etc.) capable of receiving data to be transmitted to network devices (e.g., a firmware or other software update) and dividing the data into data messages for transmission via a data network. Each data message can include respective payload data that is a portion of the data (e.g., a portion of a software or firmware update). Each data message can be transmitted to a network device. The network device can combine payload data received from multiple data messages (e.g., different portions of a firmware update) for use by the network device.

In some aspects, a distribution device can generate a list of potential recipient devices by identifying distribution devices that are neighboring devices. As used herein, the term "neighboring device" is used to refer to a network device to which a transmitting network device can transmit data with an acceptable confidence of success. For example, a neighboring device can be associated with a RSSI exceeding a threshold RSSI. The RSSI can indicate that the neighboring device is likely to successfully receive a message transmitted by the transmitting device. A distribution device can identify which distribution devices are neighboring devices. The distribution device can identify potential recipients for the payload data from a list of determined neighboring devices. The list of determined neighboring devices can be dynamically generated by the distribution device via any suitable process. The distribution device can transmit the payload data to one or more neighboring devices that are not identified in a header as having received or having been selected to receive the payload data.

Each distribution device that retransmits payload data can modify a header received by the distribution device by appending identifiers for recipient distribution devices to the data included in the header. In some aspects, appending identifiers for recipient distribution devices to a header can cause the header to reach a maximum header size. For example, 200 bytes may be allotted for a header to track which distribution devices have received the payload data. Each distribution device may be associated with a respective identifier with a length of four bytes. Transmitting the payload data to fifty distribution devices may cause the header to reach the 200-byte limit. A distribution device that receives payload data can determine whether an associated header is at the maximum size and/or whether appending additional identifiers to the header would cause the header to exceed the maximum size. The distribution device can determine that the payload data is not to be transmitted to other distribution devices based on the header being at or near the maximum header size.

These illustrative examples are given to introduce the reader to the general subject matter discussed here and are not intended to limit the scope of the disclosed concepts. The following sections describe various additional aspects and examples with reference to the drawings in which like numerals indicate like elements.

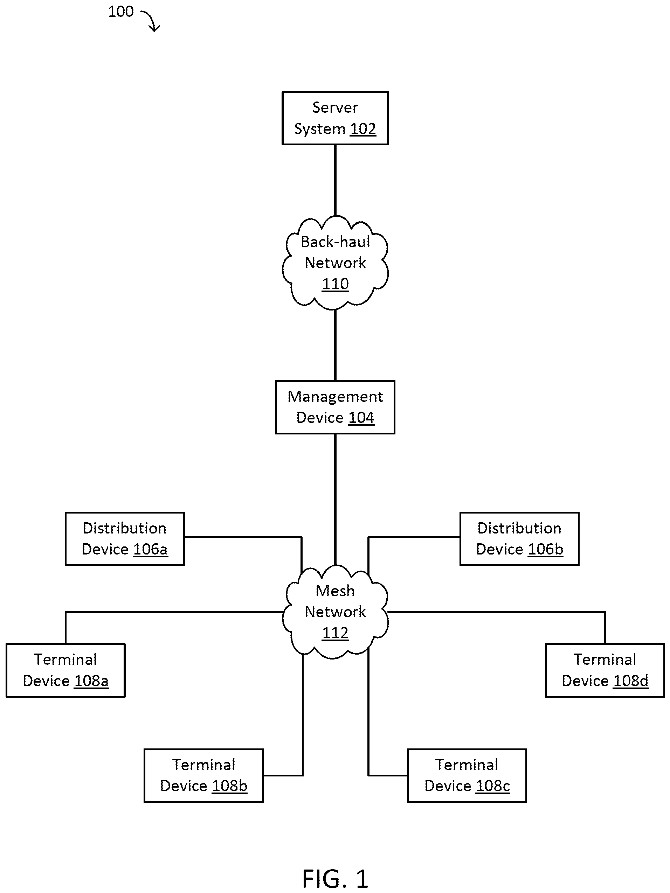

Referring now to the drawings, Figure 1 is a network diagram illustrating an example system 100 that can utilize distributed data transmission in an RF mesh network or other data network. The system 100 can include a server system 102, a network management device 104, distribution devices 106a, 106b, and terminal devices 108a-d. The server system 102 can communicate with the network management device 104 via a back-haul network 110. The network management device 104, the distribution devices 106a, 106b, and the terminal devices 108a-d can communicate via a mesh network 112.

The server system 102 can perform one or more management functions for the system 100. In one non-limiting example, the server system 102 can query the network management device 104 or route a query via the network management device 104 to one or more distribution devices 106a, 106b or to one or more terminal devices 108a-d to determine a status of one or more devices in the mesh network 112. In another non-limiting example, the server system 102 can provide software updates for one or more devices in the system 100, etc. A non-limiting example of a server system 102 is a head-end system for a distribution network that provides power or other resources to a building, structure, or other geographical area. The server system 102 can include a single computing system, such as a server, or a group of computing systems, such as multiple servers connected in a cloud or grid topology. Although Figure 1 depicts a single server system 102 for illustrative purposes, a system 100 can include any number of head-end systems. In some aspects, the server system 102 can be omitted and/or one or more functions of the server system 102 can be performed by other devices in the system 100, such as (but not limited to) the network management device 104.

The network management device 104 can communicate data between the server system 102 and the network devices accessible via the mesh network 112. A non-limiting example of a network management device 104 is a collector device or other device that can aggregate or otherwise collect data obtained by multiple metering devices in a power distribution system. Although Figure 1 depicts a single network management device 104 for illustrative purposes, a system 100 can include any number of network management devices.

The network management device 104 can communicate with the server system 102 via the back-haul network 110 using any suitable communication medium. Non-limiting examples of suitable communication media include (but are not limited to), Ethernet cable, wireless data communication, power cables for use in power line communication, etc. Power line communication can include communicating signals via cables used for providing electric power from a utility company to buildings in a geographic area.

The back-haul network 110 can include one or more communication links between a core network or backbone network accessible by the server 102 and the mesh network 112. Non-limiting examples of a back-haul network 110 include the Internet, a T1 network, or other suitable data network.

The distribution devices 106a, 106b can communicate data received from the network management device 104 to one another and/or to one or more of the terminal devices 108a-d. Although Figure 1 depicts two distribution devices 106a, 106b for illustrative purposes, a system 100 can include any number of distribution devices.

The terminal devices 108a-d can perform one or more end-user functions in a system 100. A non-limiting example of a terminal device is a metering device for monitoring and analyzing consumption of power or other resources by a building or structure. Although Figure 1 depicts four terminal devices 108a-d for illustrative purposes, a system 100 can include any number of distribution devices. Each of the distribution devices 106a, 106b can communicate with any number of terminal devices 108a-d. For example, a distribution device such as a concentrator may communicate with hundreds or thousands of metering devices or other terminal devices.

Although distribution devices and terminal devices are depicted separately in Figure 1 for illustrative purposes, other implementations are possible. In some aspects, the same device can include components both for distributing or otherwise relaying message and for performing one or more end user functions. For example, a concentrator device can include both a radio for distributing or otherwise relaying messages and a processing device for performing one or more end-user functions.

The management functions of the server system 102 may involve transmitting data messages to the distribution devices 106a, 106b using the mesh network 112. In a non-limiting example, the server system 102 may periodically transmit a firmware update or other software to the network management device 104 for updating the firmware or other software of the distribution devices 106a, 106b or terminal devices 108a-d. The firmware update or other software or other software may have a file size that can be transmitted via the back-haul network 110 without straining the available bandwidth of the back-haul network 110. The file size may be too large to transmit from the network management device 104 to the distribution devices 106a, 106b via the mesh network 112. For example, transmitting a firmware or software update having a size of one megabyte may disrupt the communication of other data via the mesh network 112 that is related to one or more end-user functions of the system 100, such as (but not limited to) communicating power consumption data measured by metering devices. A control unit, such as (but not limited to) the server system 102 or the network management device 104, can divide a one-megabyte file into data portions having sizes that are more suitable for the bandwidth limitations of the mesh network 112. For example, each portion may have a size of 700 bytes.

Using a mesh network 112 to transmit data that is divided into data messages may cause one or more distribution devices to receive duplicate messages that include the same data. For example, a first distribution device may receive the same data from a second distribution device and a third distribution device that are in different signal paths. The transmission of duplicate messages can thereby cause inefficient use of the bandwidth of the mesh network 112.

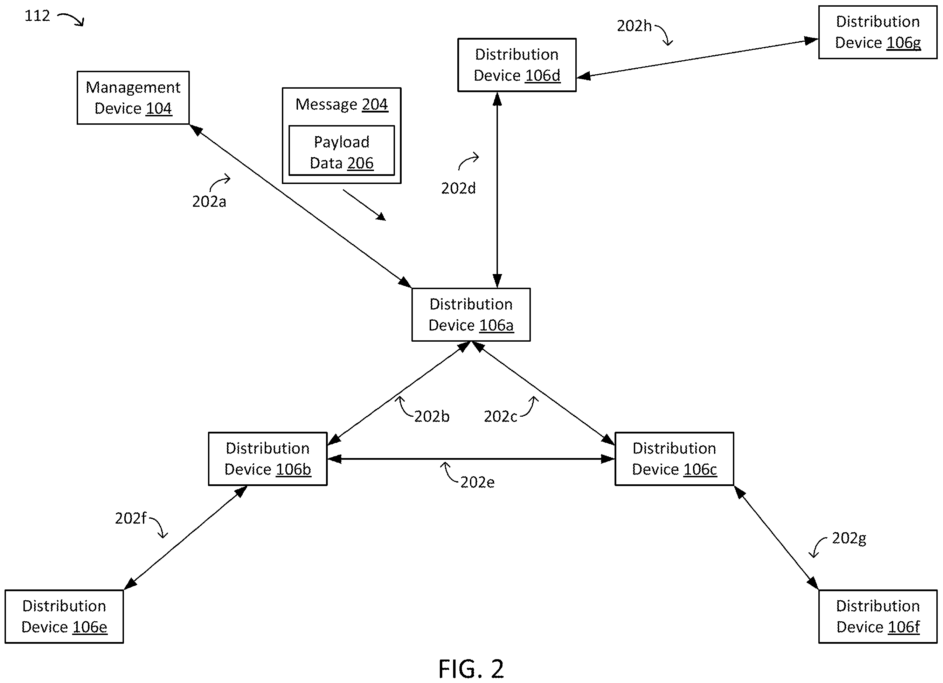

Implementing distributed data transmission, as described herein, can improve the efficiency of transmitting data via the mesh network 112. Figure 2 is a network diagram illustrating examples of distribution devices 106a-f that can implement distributed data transmission in a mesh network 112.

The mesh network 112 can be established via bi-directional wireless communication links 202a-h among the network management device 104 and the distribution devices 106a-f. The wireless communication links 202a-h can be RF links established using any suitable wireless protocol. Any suitable protocol, such as (but not limited to) a low bandwidth mesh radio RF protocol, can be used for the wireless communication links 202a-h.

The network management device 104 can transmit a message 204 to the distribution device 106a via the wireless communication link 202a. The message 204 can include payload data 206 received from a server system 102 and/or generated by the network management device 104. A non-limiting example of payload data 206 is an update (or a portion thereof) to the firmware of the distribution devices 106a-g and/or the terminal devices 108a-d. In some aspects, the payload data 206 can include all of the data transmitted by the server system 102 for distribution to the distribution devices 106a-g. In other aspects, the payload data 206 can include a portion of the data transmitted by the server system 102 for distribution to the distribution devices 106a-g. For example, the server system 102 may partition or otherwise divide a firmware or other software update into portions. Each portion can be transmitted in a respective message 204 having respective payload data 206 to the management device 104. The management device 104 can transmit each message 204 having respective payload data 206 to one or more distribution devices.

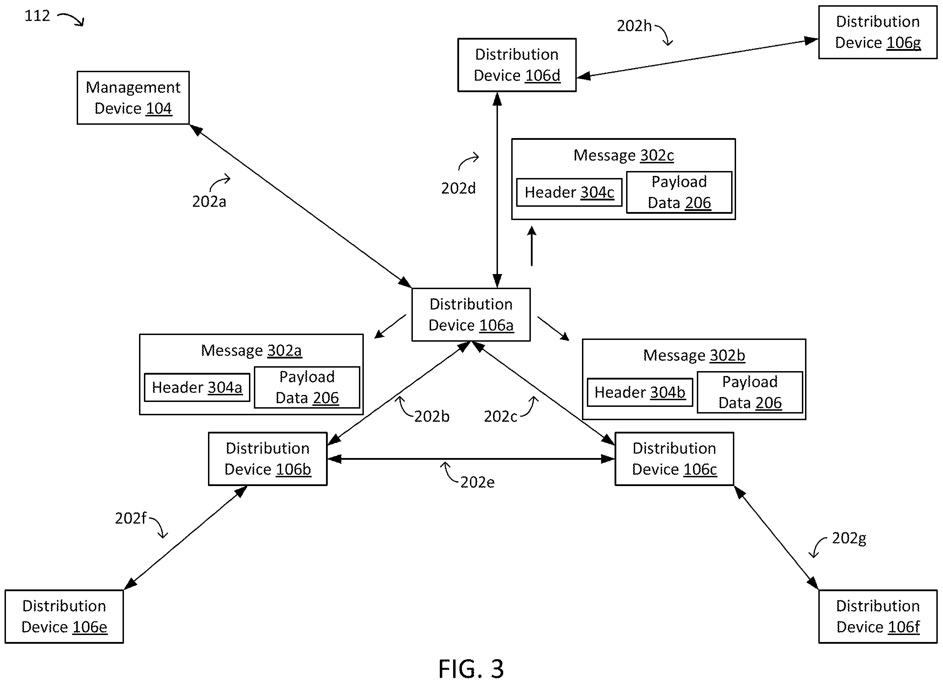

Figure 3 is a network diagram illustrating a distribution device 106a transmitting messages to neighboring distribution devices 106b-d using distributed data transmission.

The distribution device 106a can identify neighboring distribution devices 106b-d as potential recipients for the payload 206. The distribution devices 106b-d can be identified as neighbors of the distribution device 106a based on any suitable criteria.

In some aspects, each of the distribution devices 106a-g can determine a RSSI that is a measurement of the power of signals received from other distribution devices in the mesh network 112. A given distribution device can be identified as a neighboring distribution device based on the RSSI for signals received from the neighboring distribution device exceeding a given threshold. For example, the distribution device 106a can identify the distribution devices 106b-d as neighbors based on each of the distribution devices 106b-d being associated with an RSSI at or above a threshold RSSI. Any suitable threshold RSSI can be used to identify a neighboring distribution device.

In additional or alternative aspects, each of the distribution devices 106a-g can determine a tickle percentage for other distribution devices in the mesh network 112. A tickle percentage can indicate a number of successful attempts by a first distribution device to establish a communication link with a second distribution device. For example, the distribution device 106a can identify the distribution devices 106b-d as neighbors based on each of the distribution devices 106b-d being associated with a tickle percentage indicating that a majority of past attempts at establishing a communication link have been successful. Any suitable threshold tickle percentage can be used to identify a neighboring distribution device.

In additional or alternative aspects, each of the distribution devices 106a-g can distinguish neighboring devices that are distribution devices from other neighboring devices (e.g., neighboring devices that are not distribution devices, neighboring devices that are a different class of distribution device, etc.). For example, the distribution device 106a can distinguish the distribution devices 106b-d that are intended recipients of the payload data 206 from terminal devices in communication with the distribution device 106a.

The distribution device 106a can generate a list of recipient devices that includes the identified neighboring distribution devices 106b-d. The list can identify the neighboring distribution devices 106b-d by reference to any suitable identifiers for the distribution devices 106b-d. A suitable identifier can uniquely identify each of the distribution devices 106b-d in the mesh network 112. In some aspects, each of the distribution devices 106b-d can have a respective hardware identifier that is assigned to the distribution device during manufacturing. The hardware identifier may not be changed without modifying one or more hardware components of the distribution device. In other aspects, each of the distribution devices 106b-d can have a respective software identifier that is assigned to the distribution device in the process of adding the distribution device to the mesh network 112. Non-limiting examples of software identifiers include a network identifier, such as (but not limited to) an internet protocol ("IP") address, or a geographic identifier, such as (but not limited to) a set of geographic coordinates at which a distribution device is physically located.

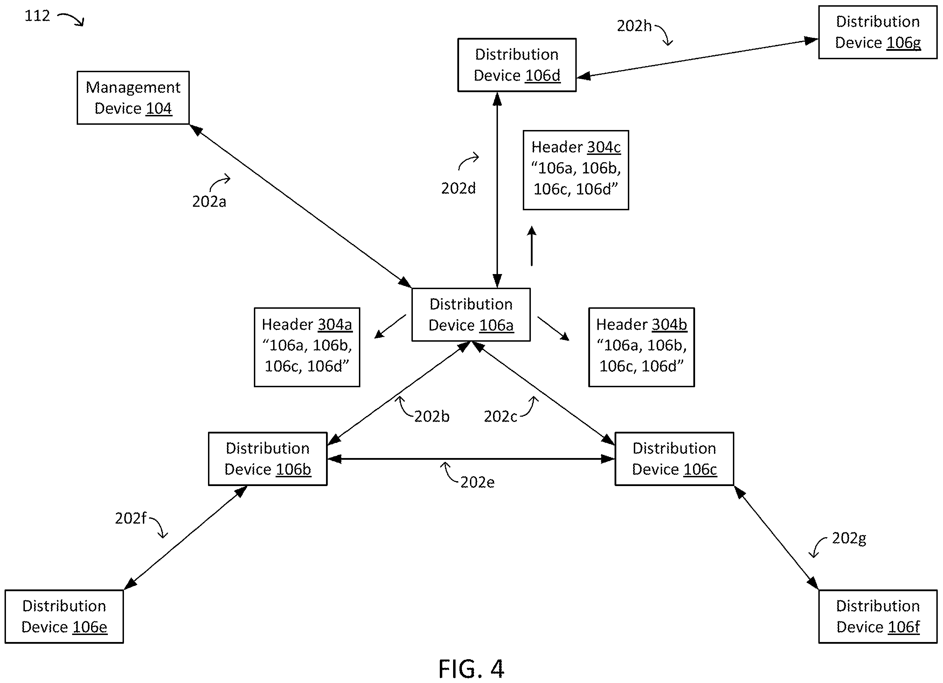

The distribution device 106a can transmit the payload data 206 to the neighboring distribution devices 106b-d via the respective messages 302a-c. The messages 302a-c can respectively include headers 304a-c. Figure 4 is a network diagram illustrating the headers 304a-c added to the messages 302a-c. As depicted in Figure 4, each of the headers 304a-c includes identifiers for the distribution devices 106b-d.

Including the headers 304a-c having the identifiers for the distribution devices 106b-d can reduce data traffic in the system 100. For example, the distribution device 106b may communicate with the distribution device 106c via the communication link 202e. In the absence of the headers 304a, 304b received by the distribution devices 106b, 106c, each of the distribution devices 106b, 106c receiving the payload data 206 from distribution device 106a may attempt to re-transmit the payload data 206 to one another via the communication link 202e. The header 304a can be used by the distribution device 106b to determine that the distribution device 106c has been selected to receive the payload data 206. The header 304b can be used by the distribution device 106c to determine that the distribution device 106b has been selected to receive the payload data 206. The distribution devices 106b, 106c can avoid transmitting the payload data 206 to one another based on the information in the headers 304a, 304b. Unnecessary data traffic over the communication link 202e can thus be reduced or eliminated.

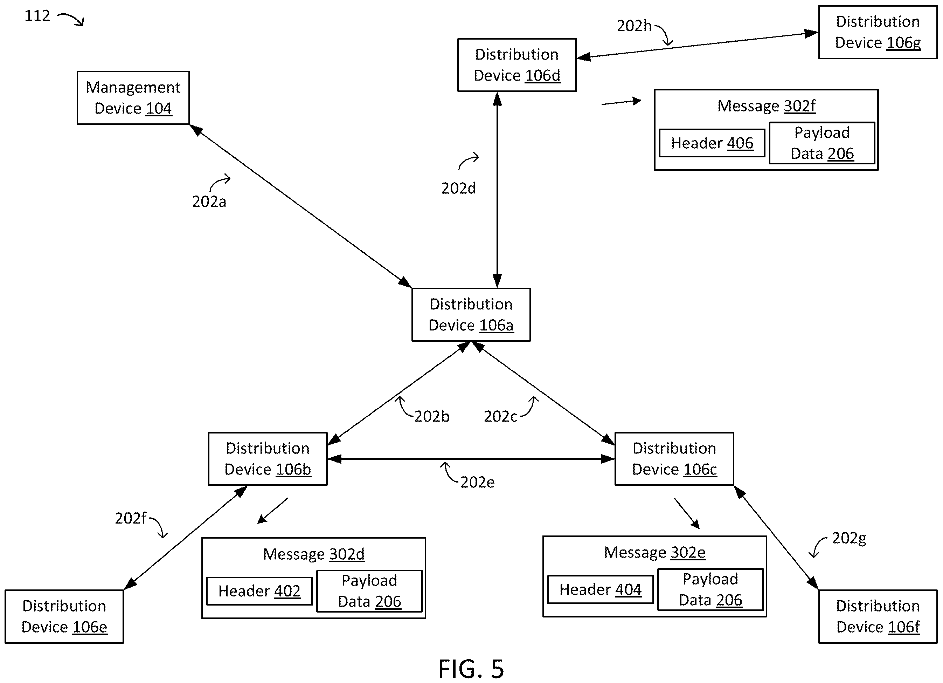

Figure 5 is a network diagram illustrating distribution devices 106b-d transmitting additional messages to additional neighboring distribution devices 106e-g using distributed data transmission.

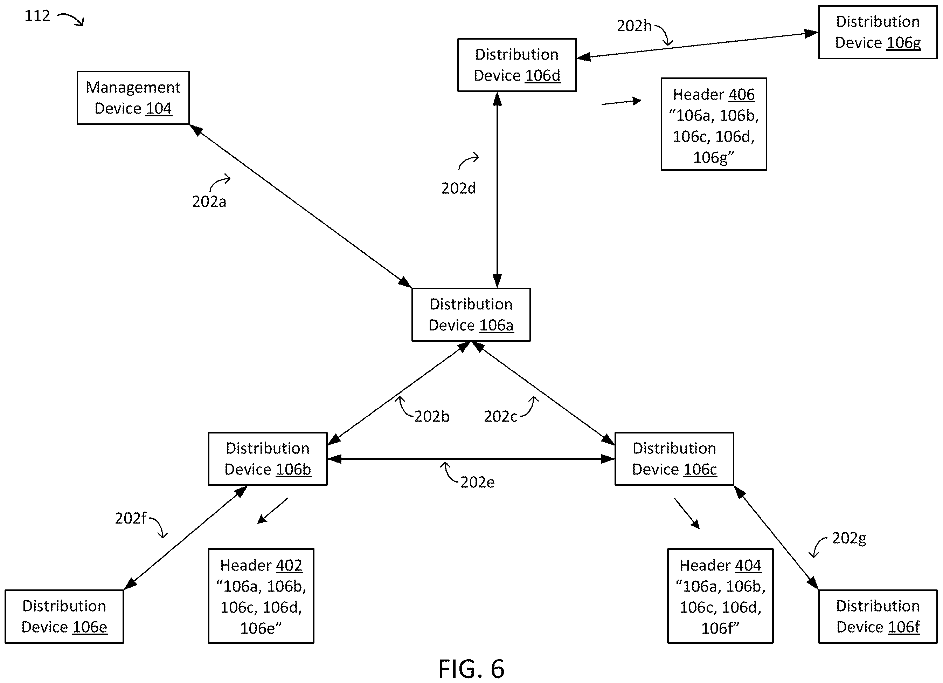

The distribution device 106b can identify neighboring distribution devices 106a, 106c, 106e. The distribution devices 106a, 106c, 106e can be identified as neighbors of the distribution device 106b based on RSSI, tickle percentage, device type, or any other suitable criteria or combination thereof. The distribution device 106b can determine from the header 304a that distribution devices 106a, 106c have previously received or been selected to receive the payload data 206. The distribution device 106b can identify the neighboring distribution device 106e as a potential recipient of the payload data 206 based on the distribution device 106e not being listed in the header 304a. The distribution device 106b can generate a header 402 by adding an identifier for the distribution device 106e to a list of distribution devices that have received the payload data 206. The distribution device 106b can transmit a message 302d including the header 402 to the neighboring distribution device 106e via the communication link 202f. The header 402 can identify the distribution devices 106a, 106b, 106c, 106d, 106e as having received or having been selected to receive the payload data 206, as depicted in Figure 6.

The distribution device 106c can identify neighboring distribution devices 106a, 106b, 106f. The distribution devices 106a, 106b, 106f can be identified as neighbors of the distribution device 106c based on RSSI, tickle percentage, device type, or any other suitable criteria or combination thereof. The distribution device 106c can determine from the header 304b that distribution devices 106a, 106b have previously received or been selected to receive the payload data 206. The distribution device 106c can identify the neighboring distribution device 106f as a potential recipient of the payload data 206 based on the distribution device 106f not being listed in the header 304b. The distribution device 106c can generate a header 404 by adding an identifier for the distribution device 106f to a list of distribution devices that have received the payload data 206. The distribution device 106c can transmit a message 302e including the header 404 to the neighboring distribution device 106f via the communication link 202g. The header 404 can identify the distribution devices 106a, 106b, 106c, 106d, 106f as having received or having been selected to receive the payload data 206, as depicted in Figure 6.

The distribution device 106d can identify neighboring distribution devices 106a, 106g. The distribution device 106d can determine from the header 304c that distribution device 106a has previously been selected to receive the payload data 206. The distribution device 106d can identify the neighboring distribution device 106g as a potential recipient of the payload data 206 based on the distribution device 106g not being listed in the header 304c. The distribution device 106d can generate a header 406 by adding an identifier for the distribution device 106g to a list of distribution devices that have received the payload data 206. The distribution device 106d can transmit a message 302f including the header 406 to the neighboring distribution device 106g via the communication link 202h. The header 406 can identify the distribution devices 106a, 106b, 106c, 106d, 106g as having received or having been selected to receive the payload data 206, as depicted in Figure 6.

Although Figure 6 depicts each of the distribution devices 106e-g respectively receiving headers 402, 404, 406 with listings of each distribution device that has been selected to receive the payload data 206, other implementations are possible. In some aspects, each of the distribution devices can receive a respective data message with a header listing neighboring devices that have received or have been targeted to receive the payload data 206. For example, the distribution device 106e may transmit a data message with a header identifying the distribution device 106b and omitting one or more of distribution devices 106a, 106c, 106d, 106e. Providing data messages with headers listing neighboring devices that have received or have been targeted to receive the payload data 206 can reduce or prevent messages with the payload data 206 being transmitted to distribution devices that have already received the payload data 206. But it is not intended to be an exhaustive list in these headers.

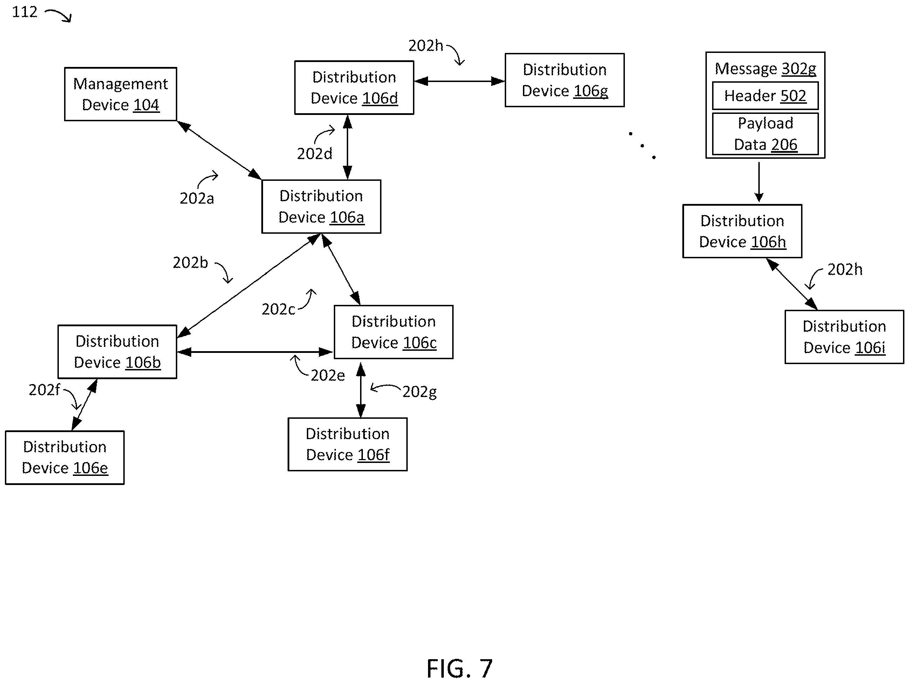

In some aspects, re-transmission of payload data 206 can cease in response to one or more distribution devices determining that a size of a message header received with the payload data 206 has a maximum header size. For example, Figure 7 is a network diagram illustrating an example of a distribution device 106h receiving a message 302g having a maximum header size. The distribution device 106h can receive a message 302g that has been re-transmitted by multiple distribution devices in the mesh network 112 between the distribution devices 106g, 106h, as indicated by the ellipsis in Figure 7. The path between the distribution devices 106g, 106h can include multiple intervening distribution devices that have re-transmitted the payload data 206. The header 502 of the message 302g can identify each of the intervening distribution devices. The list of identifiers for each of the intervening distribution devices may cause the header 502 to have the maximum size allotted for the header 502. The distribution device 106h can determine that no additional data can be added to the header 502. The distribution device 106h can cease re-transmission of the payload data 206 to any distribution device that is a neighbor of the distribution device 106h, such as distribution device 106i.

In a non-limiting example, a header 502 may have a maximum allocated size of 200 bytes. Each of the distribution devices in the mesh network 112 may have an identifier with a respective size of four bytes. Transmitting the payload data 206 to a neighboring distribution device can cause four bytes of data (i.e., the size of the identifier for the neighboring distribution device) to be added to a header received by the transmitting distribution device. The payload data 206 received from the management device 104 can be transmitted to a total of fifty neighboring distribution devices in the mesh network 112. The distribution device 106h can cease re-transmission of the payload data 206 based on determining that data identifying the distribution device 106i cannot be added to the header 502 without exceeding the 200-byte size limitation for a header.

Ceasing re-transmission of the payload data 206 can cause one or more of the distribution devices 106a-g to have an incomplete version of data transmitted from the network management device 104. A control unit or other device in the network that generates the payload data 206 can query one or more devices that use the payload data 206 to determine whether the devices that use the payload data 206 have received the payload data 206. In one non-limiting example, the server system 102 can query each of the terminal devices 108a-d to determine which of the terminal devices 108a-d have received the payload data. Some of the terminal devices 108a-d can respond to the query with an affirmative response. One or more of the terminal devices 108a-d can respond to the query with a negative response. The server system 102 can transmit the payload data in a message addressed to the terminal devices that have not received the payload data. In another non-limiting example, the network management device 104 can query each of the distribution devices 106a-i to determine which of the distribution devices 106a-i have received the payload data 206. The distribution devices 106a-h can respond to the query with an affirmative response. The distribution device 106i can respond to the query with a negative response. The network management device 104 can transmit the payload data 206 in a message addressed to the distribution device 106i based on determining that the distribution device 106i has not received the payload data 206 via the distributed data transmission process.

A query message can be used to determine the success of the distributed data transmission process. The query message can have a smaller size than the payload data 206. Using a query message with a smaller size than the payload data can reduce the amount of data traffic on the mesh network 112.

In some aspects, each of the messages 302a-g can include a session identifier associated with the payload data 206. A session can be a time period in which a distributed data transmission process is used to distribute the payload data 206 via the mesh network 112. For example, data such as a firmware update or other software update may be transmitted to the network management device 104 for distribution to the distribution devices 106a-i. The network management device 104 can partition the firmware or other software update into two partitions. Each of the partitions can include respective payload data to be transmitted to the distribution devices and a respective session identifier. The network management device 104 can transmit the first partition during a first session identified by a first session identifier and transmit the second partition during a second session identified by a second session identifier.

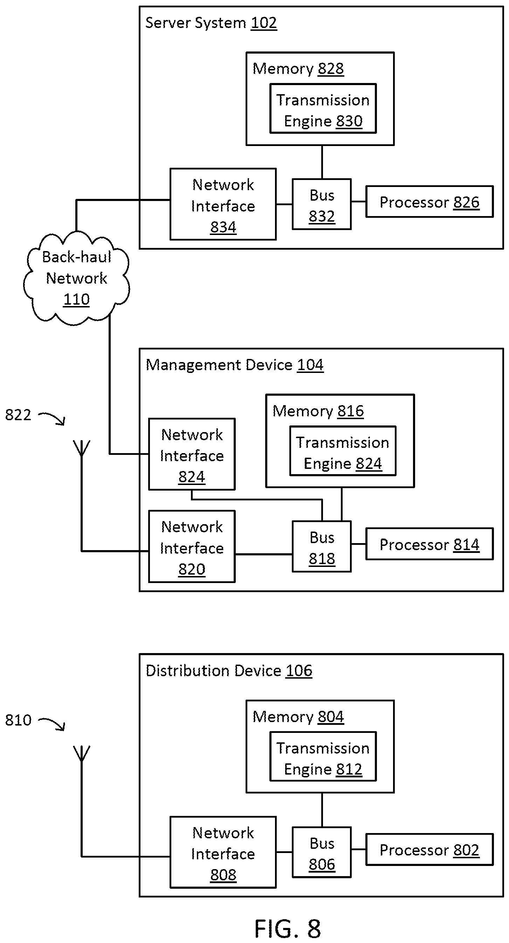

Figure 8 is a block diagram depicting examples of a network management device 104 and a distribution device 106 for implementing distributed data transmission in an RF mesh network or other data network.

The distribution device 106 can include a processing device 802. Non-limiting examples of the processing device 802 include a microprocessor, an application-specific integrated circuit ("ASIC"), a state machine, or other suitable processing device. The processing device 802 can include any number of processing devices, including one. The processing device 802 can be communicatively coupled to computer-readable media, such as memory device 804. The processing device 802 can execute computer-executable program instructions and/or accesses information respectively stored in the memory device 804.

The memory device 804 can store instructions that, when executed by the processing device 802, cause the processing device 802 to perform operations described herein. The memory device 804 may be a computer-readable medium such as (but not limited to) an electronic, optical, magnetic, or other storage device capable of providing a processor with computer-readable instructions. Non-limiting examples of such optical, magnetic, or other storage devices include read-only ("ROM") device(s), random-access memory ("RAM") device(s), magnetic disk(s), magnetic tape(s) or other magnetic storage, memory chip(s), an ASIC, configured processor(s), optical storage device(s), or any other medium from which a computer processor can read instructions. The instructions may comprise processor-specific instructions generated by a compiler and/or an interpreter from code written in any suitable computer-programming language. Non-limiting examples of suitable computer-programming languages include C, C++, C#, Visual Basic, Java, Python, Perl, JavaScript, ActionScript, and the like.

The distribution device 106 can include a bus 806 that can communicatively couple one or more components of the distribution device 106.

The management device 104 can include a processing device 814. Non-limiting examples of the processing device 814 include a microprocessor, an ASIC, a state machine, or other suitable processing device. The processing device 814 can include any number of processing devices, including one. The processing device 814 can be communicatively coupled to computer-readable media, such as memory device 816. The processing device 814 can execute computer-executable program instructions and/or accesses information respectively stored in the memory device 816.

The memory device 816 can store instructions that, when executed by the processing device 814, cause the processing device 814 to perform operations described herein. Instructions stored in the memory device 816 can include a transmission engine 824. The management device 104 can also include a bus 818 that can communicatively couple one or more components of the management device 104. Although the processing device 814, the memory device 816, and the bus 818 are depicted in Figure 8 as separate components in communication with one another, other implementations are possible. For example, the processing device 814, the memory device 816, and the bus 818 can be components of printed circuit boards or other suitable devices that can be disposed in management device 104 to store and execute programming code.

The management device 104 can also include network interface devices 822, 824. The network interface device 820 can be a transceiving device configured to establish a one or more of the communication links 202a-g via an antenna 822. A non-limiting example of the network interface device 820 is an RF transceiver. The network interface device 824 can include one or more components for establishing a communication link to the server system 102 via the back-haul network 110.

The server system 102 can include a processing device 826. Non-limiting examples of the processing device 826 include a microprocessor, an ASIC, a state machine, or other suitable processing device. The processing device 826 can include any number of processing devices, including one. The processing device 826 can be communicatively coupled to computer-readable media, such as memory device 828. The processing device 826 can execute computer-executable program instructions and/or accesses information respectively stored in the memory device 828.

The memory device 828 can store instructions that, when executed by the processing device 826, cause the processing device 826 to perform operations described herein. Instructions stored in the memory device 828 can include a transmission engine 830. The server system 102 can also include a bus 832 that can communicatively couple one or more components of the server system 102. Although the processing device 826, the memory device 828, and the bus 832 are depicted in Figure 8 as separate components in communication with one another, other implementations are possible. For example, the processing device 826, the memory device 828, and the bus 832 can be components of printed circuit boards or other suitable devices that can be disposed in server system 102 to store and execute programming code.

The server system 102 can also include a network interface devices 834. The network interface device 834 can include one or more components for establishing a communication link to the management device 104 via the back-haul network 110.

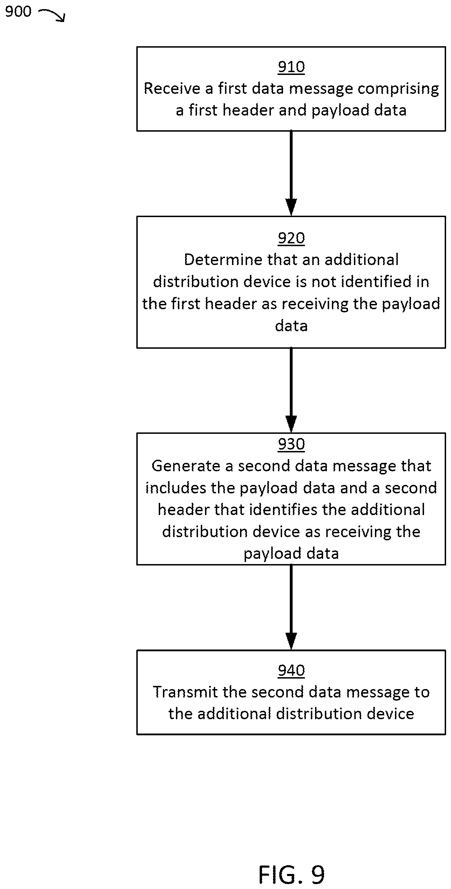

Figure 9 is a flow chart illustrating an example method 900 for distributed data transmission in an RF mesh network or other data network. For illustrative purposes, the method 900 is described with reference to the system implementation depicted in Figures 1-8. Other implementations, however, are possible.

The method 900 involves a first distribution device receiving a first data message that includes a first header and payload data, as shown in block 910. For example, a distribution device 106 can receive a data message via a network interface device 808 from a network management device 104 or another distribution device, as described above with respect to Figures 2-8.

The method 900 further involves the first distribution device determining that a second distribution device is not identified in the first header as receiving the payload data, as shown in block 920. For example, a processing device 802 of the distribution device 106 can execute a transmission engine 812 to access the header. The transmission engine 812 can determine that one or more other distribution devices, such as neighboring devices, are not identified by the header as receiving the payload data 206 based on identifiers for the other distribution devices being absent from the header, as described above with respect to Figures 1-7.

The method 900 further involves the first distribution device generating a second data message that includes the payload data and a second header identifying the second distribution device as receiving the payload data, as shown in block 930. The second data message can include the same payload data as the first data message and a different header than the first data message. For example, the processing device 802 can execute the transmission engine 812 to generate a second data message. The transmission engine 812 can generate the second header by appending identifiers of recipient distribution devices to the first header. The second header can identify other devices that received or have been selected to receive the payload data 206 prior to the distribution device 106 or contemporaneously with the distribution device 106. In some aspects, the second header can also identify that the distribution device 106 has received or has been selected to receive the payload data 206. The second header can also identify devices to which the distribution device 106 transmits the payload data 206 using the second data message, as described above with respect to Figures 1-7.

The method 900 further involves first distribution device transmitting the second data message to the second distribution device via the mesh network, as shown in block 940. For example, the distribution device 106 can transmit the second data message using the network interface device 808 and the antenna 810 via one of the communication links 202a-h, as described above with respect to Figures 1-7.

In additional or alternative aspects, a control unit, such as (but not limited to) the server system 102 or the network management device 104, can determine that payload data 206 has not been received by one of the distribution devices 106a-i via a distributed data transmission process. The control unit can perform one or more operations for verifying that the payload data 206 is transmitted to the distribution devices that have not received or that have not confirmed receipt of the payload data 206 via a distributed data transmission process.

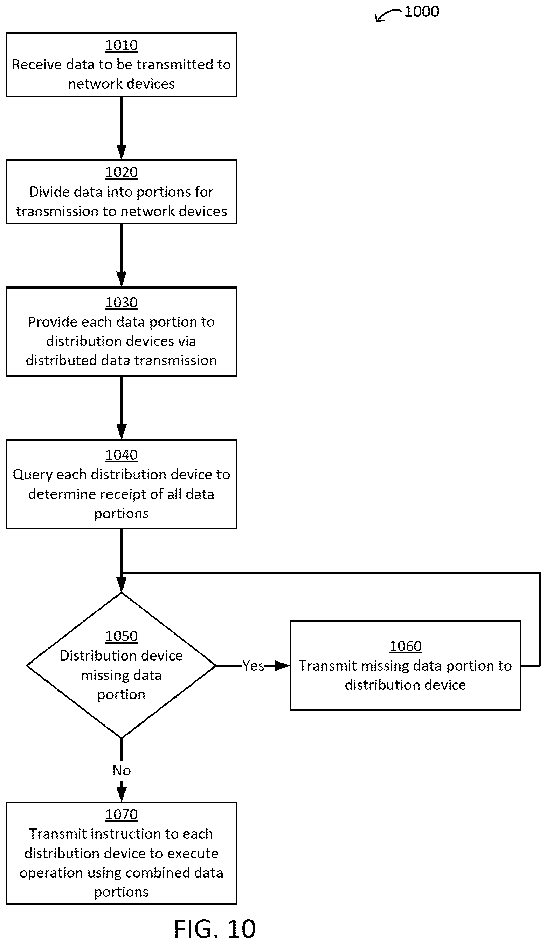

Figure 10 is a flow chart illustrating an example method 1000 for distributed data transmission with error verification. For illustrative purposes, the method 1000 is described with reference to the system implementation depicted in Figure 8. Other implementations, however, are possible.

The method 1000 involves receiving data to be transmitted to one or more network devices, as depicted in block 1010. For example, a control unit in the system 100 may receive a firmware update or other software update for devices in the system 100 (e.g., the distribution devices 106a-f, the terminal devices 108a-d, etc.). Any suitable control unit can receive the data via any suitable process. In one non-limiting example, the transmission engine 830 executed by the processor 826 of the server system 102 can receive the data. In another non-limiting example, the transmission engine 830 executed by the processor 826 of the network management device 104 can receive the data from the server system 102 via the back-haul network 110.

The method 1000 further involves partitioning or otherwise dividing the data into portions for transmission to network devices in the system 100, as depicted in block 1020. In one non-limiting example, the processor 826 of the server system 102 can execute the transmission engine 830 to partition the data into multiple data messages, each of which includes payload data. In another non-limiting example, the processor 814 of the management device 104 can execute the transmission engine 824 to partition the data into multiple data messages, each of which includes payload data. The data can be partitioned based on the bandwidth or other capacity measurement for the mesh network 112.

The method 1000 further involves providing each data portion to distribution devices, as depicted in block 1030. For example, the server system 102 can transmit each data portion to the management device 104. The respective payload data 206 for each data portion can include a part of the data (e.g., a software or firmware update) to be reassembled by a target device that uses the data (e.g., a network device for which firmware or other software is to be updated). The processor 814 of the management device 104 can execute the transmission engine 824 to provide each data portion to one or more distribution devices for distribution as described above with respect to Figures 2-7 and/or using method 900 as described above with respect to Figure 9.

In some aspects, one or more of the transmission engines 824, 830 can associate a respective session with each data portion. Each data portion can be provided to the distribution devices of the mesh network 112 for transmission and/or retransmission during a respective session. In some aspects, the server system 102 or the network management device 104 can provide each data portion after a previous session for a previous data portion has expired.

The method 1000 further involves querying each of the distribution devices 106a-i to determine whether each distribution device has received all data portions, as depicted in block 1040. In one non-limiting example, the processor 826 of the server system 102 can execute the transmission engine 830 to generate a respective query addressed to each of the distribution devices 106a-i. The server system 102 can transmit the queries to the management device 104 for routing to the distribution devices 106a-i. In another non-limiting example, the processor 814 of the management device 104 can execute the transmission engine 824 to generate a respective query addressed to each of the distribution devices 106a-i.

The method 1000 further involves determining whether any of the distribution devices 106a-i has not received all data portions, as depicted in block 1050. For example, one or more of the distribution devices 106a-i can respond to a query from the management device 104 by indicating that the distribution device has not one or more data portions.

If any of the distribution devices 106a-i has not received all data portions, the method 1000 involves transmitting the missing portions to the distribution device that lacks one or more data portions, as depicted in block 1060. The process 900 returns to block 1050.

If all of the distribution devices 106a-i have received all portions of the payload data 206, the method 1000 involves transmitting one or more instructions to the distribution devices 106a-i to perform one or more operations using the combined data portions, as depicted in block 1070. For example, the data may include a firmware update or other software update for the distribution devices 106a-i. The network management device 104 can transmit instructions for each of the distribution devices 106a-i to apply the firmware update or other software update. Each of the distribution devices 106a-i can combine or otherwise reassemble the received portions of the firmware update or other software update. Each of the distribution devices 106a-i can apply the firmware update or other software update.

### General

Numerous specific details are set forth herein to provide a thorough understanding of the claimed subject matter. However, those skilled in the art will understand that the claimed subject matter may be practiced without these specific details. In other instances, methods, apparatuses, or systems that would be known by one of ordinary skill have not been described in detail so as not to obscure claimed subject matter.

Some portions are presented in terms of algorithms or symbolic representations of operations on data bits or binary digital signals stored within a computing system memory, such as a computer memory. These algorithmic descriptions or representations are examples of techniques used by those of ordinary skill in the data processing arts to convey the substance of their work to others skilled in the art. An algorithm is a self-consistent sequence of operations or similar processing leading to a desired result. In this context, operations or processing involves physical manipulation of physical quantities. Typically, although not necessarily, such quantities may take the form of electrical or magnetic signals capable of being stored, transferred, combined, compared or otherwise manipulated. It has proven convenient at times, principally for reasons of common usage, to refer to such signals as bits, data, values, elements, symbols, characters, terms, numbers, numerals, or the like. It should be understood, however, that all of these and similar terms are to be associated with appropriate physical quantities and are merely convenient labels. Unless specifically stated otherwise, it is appreciated that throughout this specification discussions utilizing terms such as "processing," "computing," "calculating," "determining," and "identifying" or the like refer to actions or processes of a computing device, such as one or more computers or a similar electronic computing device or devices, that manipulate or transform data represented as physical electronic or magnetic quantities within memories, registers, or other storage devices, transmission devices, or display devices of the computing platform.

The system or systems discussed herein are not limited to any particular hardware architecture or configuration. A computing device can include any suitable arrangement of components that provide a result conditioned on one or more function calls. Suitable computing devices include multipurpose microprocessor-based computer systems accessing stored software that programs or configures the computing system from a general-purpose computing apparatus to a specialized computing apparatus implementing one or more aspects of the present subject matter. Any suitable programming, scripting, or other type of language or combinations of languages may be used to implement the teachings contained herein in software to be used in programming or configuring a computing device.

Aspects of the methods disclosed herein may be performed in the operation of such computing devices. The order of the blocks presented in the examples above can be varied-for example, blocks can be re-ordered, combined, and/or broken into sub-blocks. Certain blocks or processes can be performed in parallel.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or values beyond those recited. Headings, lists, and numbering included herein are for ease of explanation only and are not meant to be limiting.

While the present subject matter has been described in detail with respect to specific aspects thereof, it will be appreciated that those skilled in the art, upon attaining an understanding of the foregoing, may readily produce alterations to, and variations of, such aspects. Accordingly, it should be understood that the present description has been presented for purposes of example rather than limitation, and does not preclude such modifications, variations, and/or additions as would be readily apparent to one of ordinary skill in the art, within the scope of the appended claims.

## Claims

1. A distribution device (106, 106a-h) configured for distributed data transmission in a mesh network (112), the distribution device comprising:
a network interface device (808) configured for:
receiving a data message (204, 302a-c) comprising a header (304a-c, 402, 404, 406) and payload data (206) and
transmitting an additional data message (302a-f) to an additional distribution device (106b-i);
and
a processing device (802) coupled to the network interface device, the processing device configured for:
generating the additional data message comprising the payload data and an additional header (304a-c, 402, 404, 406, 502) wherein the additional header identifies the additional distribution device as being selected to receive the payload data;
**characterised in that** the processing device is configured for:
determining that the additional distribution device is a neighboring device and determining that the additional distribution device is not identified in the header as being selected to receive the payload data.

2. The distribution device (106, 106a-h) of claim 1, wherein the determining that the additional distribution device (106b-i) is the neighboring device comprises at least one of:
determining that a received signal strength indicator of a signal received from the additional distribution device exceeds a threshold received signal strength indicator;
determining that a percentage of successful attempts by the distribution device to establish a communication link with the additional distribution device exceeds a threshold percentage; and
determining that the distribution device (106, 106a-h) and the additional distribution device (106b-i) have a common device type.

3. The distribution device (106, 106a-h) of claim 1, wherein the processing device (802) is further configured for determining that a session for transmitting the payload data (206) is active, wherein the additional data message (302a-f) is generated based on the session being active.

4. A system for distributed data transmission in a mesh network (112), the system comprising:
a first distribution device (106, 106a-g) comprising:
a first network interface device (808) configured for receiving a first data message (204, 302a-c), the first data message comprising a first header (304a-c, 402, 404, 406) and payload data (206), and
a first processing device (802) configured for generating a second data message (302a-f) wherein the second data message comprises the payload data (206) and a second header (304a-c, 402, 404, 406, 502),
wherein the first network interface device is further configured for transmitting the second data message to a second distribution device (106b-h); and
the second distribution device is communicatively coupled to the first distribution device, the second distribution device comprising:
a second network interface device (808) configured for receiving the second data message,
**characterised in that** the first processing device (802) is configured for:
determining that the second distribution device (106b-h) is not identified in the first header (304a-c, 402, 404, 406) as being selected to receive the payload data, and generating the second data message (302a-f) based on determining that the second distribution device is not identified in the first header (304a-c, 402, 404, 406) as being selected to receive the payload data, and wherein the second header (304a-c, 402, 404, 406, 502) identifies the second distribution device (106b-h) as being selected to receive the payload data (206).

5. The system of claim 4, wherein the second distribution device (106b-h) comprises a second processing device (802) further configured for:
determining that a third distribution device (106c-i) is identified in the second header (304a-c, 402, 404, 406, 502) as being selected to receive the payload data (206); and
based on the second header identifying the third distribution device as being selected to receive the payload data, excluding the third distribution device (106c-i) from a list of recipient distribution devices for the payload data (206).

6. The system of claim 4, wherein the first processing device (802) is further configured for determining that the second distribution device (106b-h) is a neighboring device of the first distribution device (106, 106a-g), wherein the second data message (302a-f) is generated based on the second distribution device (106b-h) being the neighboring device.

7. The system of claim 6, wherein determining that the second distribution device (106b-h) is the neighboring device comprises:
identifying a received signal strength indicator for a previous message received by the first network interface device (808) from the second network interface device (808) and determining that the received signal strength indicator exceeds a threshold received signal strength indicator;
or
determining that a percentage of successful attempts by the first distribution device (106, 106a-g) to establish a communication link with the second distribution device (106b-h) exceeds a threshold percentage;
or
determining that the first distribution device (106, 106a-g) and the second distribution device (106b-h) have a common device type.

8. The system of claim 4, further comprising a control unit (104) communicatively coupled to the first distribution device (106, 106a-g), the control unit configured for:
receiving data to be provided to a plurality of distribution devices (106, 106a-i) including the first, second, and third distribution devices during a first session;
partitioning data into the payload data (206) and additional payload data (206);
transmitting the payload data (206) for transmission via the plurality of distribution devices (106, 106a-i); and
transmitting the additional payload data (206) for transmission via the plurality of distribution devices (106, 106a-i) during a second session.

9. The system of claim 8, wherein the control unit (104) is further configured for:
determining that at least one of the payload data (206) or the additional payload data (206) was not received by at least one distribution device of the plurality of distribution devices (106, 106a-i) during a respective one of the first session and the second session; and
retransmitting the at least one of the payload data (206) or the additional payload data (206) to the at least one distribution device.

10. A method for distributed data transmission in a mesh network (112), the method comprising:
receiving, by a first distribution device (106, 106a-h) in the mesh network, a first data message (204, 302a-c) comprising a first header (304a-c, 402, 404, 406) and payload data (206);
generating, by the first distribution device (106, 106a-h), a second data message (302a-f) comprising the payload data (206) and a second header (304a-c, 402, 404, 406, 502), and
transmitting, by the first distribution device (106, 106a-h), the second data message (302a-f) to a second distribution device (106b-i) via the mesh network (112);
**characterised in that** the first distribution device (106, 106a-h) determines that the second distribution device (106b-i) is not identified in the first header (304a-c, 402, 404, 406) as being selected to receive the payload data (206) and wherein the second header (304a-c, 402, 404, 406, 502) identifies the second distribution device (106b-i) as being selected to receive the payload data (206).

11. The method of claim 10, further comprising determining, by the first distribution device (106, 106a-h), that the second distribution device (106b-i) is a neighboring device, wherein the second data message (302a-f) is generated based on the second distribution device (106b-i) being the neighboring device.

12. The method of claim 11, wherein determining that the second distribution device (106b-h) is the neighboring device comprises:
identifying, by the first distribution device (106, 106a-h), a received signal strength indicator for a previous message received from the second distribution device (106b-i); and determining, by the first distribution device, that the received signal strength indicator exceeds a threshold received signal strength indicator;
or
identifying, by the first distribution device (106, 106a-h), that a percentage of successful attempts by the first distribution device to establish a communication link with the second distribution device (106b-i) exceeds a threshold percentage;
or
determining, by the first distribution device (106, 106a-h), that the first distribution device and the second distribution device (106b-i) have a common device type.

13. The method of claim 10, further comprising:
A. determining, by the second distribution device (106b-i), that a third distribution device (106b-i) is not identified in the second header (304a-c, 402, 404, 406, 502) as being selected to receive the payload data (206);
generating, by the second distribution device (106b-i), a third data message (302a-f) comprising the payload data (206) and a third header (304a-c, 402, 404, 406, 502), wherein the third header identifies the first, second, and third distribution devices (106, 106a-i) as being selected to receive the payload data (206);
transmitting, by the second distribution device (106b-i), the third data message (302a-f) to the third distribution device (106b-i) via the mesh network (112);
and/or
B. determining, by the second distribution device (106b-i), that a third distribution device (106b-i) is identified in the second header (304a-c, 402, 404, 406, 502) as being selected to receive the payload data (206); and
excluding, by the second distribution device (106b-i), the third distribution device (106b-i) from a list of recipient distribution devices (106b-i) for the payload data (206) based on the second header (304a-c, 402, 404, 406, 502) identifying the third distribution device (106b-i) as being selected to receive the payload data (206).

14. The method of claim 10, further comprising:
identifying, by the second distribution device (106b-i), a third distribution device (106b-i) that is a neighboring device of the second distribution device (106b-i);
determining, by the second distribution device (106b-i), that adding an identifier for the third distribution device (106b-i) to the second header (304a-c, 402, 404, 406, 502) would cause a size of the second header to exceed a maximum header size; and determining, by the second distribution device (106b-i), that the payload data (206) is not to be transmitted to the third distribution device (106b-i) based on determining that the adding the identifier to the second header (304a-c, 402, 404, 406, 502) would cause a size of the second header to exceed the maximum header size.

15. The method of claim 14, further comprising:
determining, by a control unit (104), that the third distribution device (106b-i) has not received the payload data (206); and
transmitting, by the control unit (104), the payload data (206) to the third distribution device (106b-i).

## Patentansprüche

1. Verteilvorrichtung (106, 106a-h), die zur verteilten Datenübertragung in einem Maschennetz (112) konfiguriert ist, wobei die Verteilvorrichtung Folgendes umfasst:
eine Netzschnittstellenvorrichtung (808), die konfiguriert ist zum
Empfangen einer Datennachricht (204, 302a-c), die einen Kopfteil (304a-c, 402, 404, 406) und Nutzlastdaten (206) umfasst, und
Senden einer zusätzlichen Datennachricht (302a-f) zu einer zusätzlichen Verteilvorrichtung (106b-i); und
eine Verarbeitungsvorrichtung (802), die an die Netzschnittstellenvorrichtung gekoppelt ist, wobei die Verarbeitungsvorrichtung konfiguriert ist zum
Erzeugen der zusätzlichen Datennachricht, die die Nutzlastdaten und einen zusätzlichen Kopfteil (304a-c, 402, 404, 406, 502) umfasst, wobei der zusätzliche Kopfteil die zusätzliche Verteilvorrichtung dafür identifiziert, dass sie zum Empfangen der Nutzlastdaten ausgewählt ist;
**dadurch gekennzeichnet, dass** die Verarbeitungsvorrichtung konfiguriert ist zum
Bestimmen, dass die zusätzliche Verteilvorrichtung eine benachbarte Vorrichtung ist, und
Bestimmen, dass die zusätzliche Verteilvorrichtung nicht im Kopfteil dafür identifiziert ist, dass sie zum Empfangen der Nutzlastdaten gewählt ist.

2. Verteilvorrichtung (106, 106a-h) nach Anspruch 1, wobei das Bestimmen, dass die zusätzliche Verteilvorrichtung (106b-i) die benachbarte Vorrichtung ist, Folgendes umfasst:
Bestimmen, dass ein Empfangssignalstärkenindikator eines Signals, das von der zusätzlichen Verteilvorrichtung empfangen wurde, einen Empfangssignalstärkenindikator überschreitet;
Bestimmen, dass ein Prozentsatz erfolgreicher Versuche durch die Verteilvorrichtung, eine Kommunikationsverbindung mit der zusätzlichen Verteilvorrichtung aufzubauen, einen Schwellenwertprozentsatz überschreitet; und/oder
Bestimmen, dass die Verteilvorrichtung (106, 106a-h) und die zusätzliche Verteilvorrichtung (106b-i) einen gemeinsamen Vorrichtungstyp aufweisen.

3. Verteilvorrichtung (106, 106a-h) nach Anspruch 1, wobei die Verarbeitungsvorrichtung (802) ferner konfiguriert ist, zu bestimmen, dass eine Sitzung zum Senden der Nutzlastdaten (206) aktiv ist, wobei die zusätzliche Datennachricht (302a-f) auf der Grundlage davon erzeugt wird, dass die Sitzung aktiv ist.

4. System zur verteilten Datenübertragung in einem Maschennetz (112), wobei das System Folgendes umfasst:
eine erste Verteilvorrichtung (106, 106a-g), die Folgendes umfasst:
eine erste Netzschnittstellenvorrichtung (808), die konfiguriert ist, eine erste Datennachricht (204, 302a-c) zu empfangen, wobei die erste Datennachricht einen ersten Kopfteil (304a-c, 402, 404, 406) und Nutzlastdaten (206) umfasst, und
eine erste Verarbeitungsvorrichtung (802), die konfiguriert ist, eine zweite Datennachricht (302a-f) zu erzeugen, wobei die zweite Datennachricht die Nutzlastdaten (206) und einen zweiten Kopfteil (304a-c, 402, 404, 406, 502) umfasst, wobei
die erste Netzschnittstellenvorrichtung ferner konfiguriert ist, die zweite Datennachricht zu einer zweiten Verteilvorrichtung (106b-h) zu senden; und
die zweite Verteilvorrichtung mit der ersten Verteilvorrichtung kommunikationstechnisch gekoppelt ist, wobei die zweite Verteilvorrichtung Folgendes umfasst:
eine zweite Netzschnittstellenvorrichtung (808), die konfiguriert ist, die zweite Datennachricht zu empfangen,
**dadurch gekennzeichnet, dass** die erste Verarbeitungsvorrichtung (802) konfiguriert ist zum
Bestimmen, dass die zweite Verteilvorrichtung (106b-h) im ersten Kopfteil (304a-c, 402, 404, 406) nicht dafür identifiziert ist, dass sie zum Empfangen der Nutzlastdaten gewählt ist, und
Erzeugen der zweiten Datennachricht (302a-f) auf der Grundlage des Bestimmens, dass die zweite Verteilvorrichtung nicht im ersten Kopfteil (304a-c, 402, 404, 406) dafür identifiziert ist, dass sie zum Empfangen der Nutzlastdaten gewählt ist, wobei der zweite Kopfteil (304a-c, 402, 404, 406, 502) die zweite Verteilvorrichtung (106b-h) dafür identifiziert, dass sie zum Empfangen der Nutzlastdaten (206) gewählt ist.

5. System nach Anspruch 4, wobei die zweite Verteilvorrichtung (106b-h) eine zweite Verarbeitungsvorrichtung (802) umfasst, die ferner konfiguriert ist zum
Bestimmen, dass eine dritte Verteilvorrichtung (106c-i) im zweiten Kopfteil (304a-c, 402, 404, 406, 502) dafür identifiziert ist, dass sie zum Empfangen der Nutzlastdaten (206) gewählt ist; und
auf der Grundlage davon, dass der zweite Kopfteil, der die dritte Verteilvorrichtung dafür identifiziert, dass sie zum Empfangen der Nutzlastdaten gewählt ist, die dritte Verteilvorrichtung (106c-i) von einer Liste von Empfängerverteilvorrichtungen für die Nutzlastdaten (206) ausschließt.

6. System nach Anspruch 4, wobei die erste Verarbeitungsvorrichtung (802) ferner konfiguriert ist, zu bestimmen, dass die zweite Verteilvorrichtung (106b-h) eine benachbarte Vorrichtung der ersten Verteilvorrichtung (106, 106a-g) ist, wobei die zweite Datennachricht (302a-f) auf der Grundlage davon erzeugt wird, dass die zweite Verteilvorrichtung (106b-h) die benachbarte Vorrichtung ist.

7. System nach Anspruch 6, wobei das Bestimmen, dass die zweite Verteilvorrichtung (106b-h) die benachbarte Vorrichtung ist, Folgendes umfasst:
Identifizieren eines Empfangssignalstärkenindikators für eine vorhergehende Nachricht, die durch die ersten Netzschnittstellenvorrichtung (808) von der zweiten Netzschnittstellenvorrichtung (808) empfangen wurde, und Bestimmen, dass der Empfangssignalstärkenindikator einen Schwellenwertempfangssignalstärkenindikator überschreitet;
Bestimmen, dass ein Prozentsatz erfolgreicher Versuche durch die erste Verteilvorrichtung (106, 106ag), eine Kommunikationsverbindung mit der zweiten Verteilvorrichtung (106b-h) aufzubauen, einen Schwellenwertprozentsatz überschreitet; oder
Bestimmen, dass die erste Verteilvorrichtung (106, 106a-g) und die zweite Verteilvorrichtung (106b-h) einen gemeinsamen Vorrichtungstyp aufweisen.

8. System nach Anspruch 4, das ferner eine Steuereinheit (104) umfasst, die an die erste Verteilvorrichtung (106, 106a-g) kommunikationstechnisch gekoppelt ist, wobei die Steuereinheit konfiguriert ist zum
Empfangen von Daten, die mehreren Verteilvorrichtungen (106, 106a-i), die die erste, die zweite und die dritte Verteilvorrichtung enthalten, während einer ersten Sitzung bereitgestellt werden sollen;
Partitionieren von Daten in die Nutzlastdaten (206) und in zusätzliche Nutzlastdaten (206);
Senden der Nutzlastdaten (206) zum Senden mittels der mehreren Verteilvorrichtungen (106, 106a-i) und
Senden der zusätzlichen Nutzlastdaten (206) zum Senden mittels der mehreren Verteilvorrichtungen (106, 106a-i) während einer zweiten Sitzung.

9. System nach Anspruch 8, wobei die Steuereinheit (104) ferner konfiguriert ist zum
Bestimmen, dass die Nutzlastdaten (206) und/oder die zusätzlichen Nutzlastdaten (206) nicht während einer entsprechenden der ersten Sitzung und der zweiten Sitzung durch mindestens eine Verteilvorrichtung der mehreren Verteilvorrichtungen (106, 106a-i) empfangen wurden; und
erneutes Übertragen der Nutzlastdaten (206) und/oder der zusätzlichen Nutzlastdaten (206) zur mindestens einen Verteilvorrichtung.

10. Verfahren für eine verteilte Datenübertragung in einem Maschennetz (112), wobei das Verfahren Folgendes umfasst:
Empfangen durch eine erste Verteilvorrichtung (106, 106a-h) im Maschennetz einer ersten Datennachricht (204, 302a-c), die einen Kopfteil (304a-c, 402, 404, 406) und Nutzlastdaten (206) umfasst;
Erzeugen durch die erste Verteilvorrichtung (106, 106a-h) einer zweiten Datennachricht (302a-f), die die Nutzlastdaten (206) und einen zweiten Kopfteil (304a-c, 402, 404, 406, 502) umfasst, und
Senden durch die erste Verteilvorrichtung (106, 106a-h) der zweiten Datennachricht (302a-f) zu einer zweiten Verteilvorrichtung (106b-i) mittels des Maschennetzes (112);
**dadurch gekennzeichnet, dass** die erste Verteilvorrichtung (106, 106a-h) bestimmt, dass die zweite Verteilvorrichtung (106b-i) im ersten Kopfteil (304a-c, 402, 404, 406) nicht dafür identifiziert ist, dass sie zum Empfangen der Nutzlastdaten (206) gewählt ist, wobei der zweite Kopfteil (304a-c, 402, 404, 406, 502) die zweite Verteilvorrichtung (106b-i) dafür identifiziert, dass sie zum Empfangen der Nutzlastdaten (206) gewählt ist.

11. Verfahren nach Anspruch 10, das ferner ein Bestimmen durch die erste Verteilvorrichtung (106, 106a-h) umfasst, dass die zweite Verteilvorrichtung (160b-i) eine benachbarte Vorrichtung ist, wobei die zweite Datennachricht (302a-f) auf der Grundlage davon erzeugt wird, dass die zweite Verteilvorrichtung (106b-i) die benachbarte Vorrichtung ist.

12. Verfahren nach Anspruch 11, wobei das Bestimmen, dass die zweite Verteilvorrichtung (106b-h) die benachbarte Vorrichtung ist, Folgendes umfasst:
Identifizieren durch die erste Verteilvorrichtung (106, 106a-h) eines Empfangssignalstärkenindikators für eine vorhergehende Nachricht, die von der zweiten Verteilvorrichtung (106b-i) empfangen wurde; und Bestimmen durch die erste Verteilvorrichtung, dass der Empfangssignalstärkenindikator einen Schwellenwertempfangssignalstärkenindikator überschreitet;
Identifizieren durch die erste Verteilvorrichtung (106, 106a-h), dass ein Prozentsatz erfolgreicher Versuche durch die erste Verteilvorrichtung, eine Kommunikationsverbindung mit der zweiten Verteilvorrichtung (106b-i) aufzubauen, einen Schwellenwertprozentsatz überschreitet; oder
Bestimmen durch die erste Verteilvorrichtung (106, 106a-h), dass die erste Verteilvorrichtung und die zweite Verteilvorrichtung (106b-i) einen gemeinsamen Vorrichtungstyp aufweisen.

13. Verfahren nach Anspruch 10, das ferner Folgendes umfasst:
A. Bestimmen durch die zweite Verteilvorrichtung (106b-i), dass eine dritte Verteilvorrichtung (106b-i) im zweiten Kopfteil (304a-c, 402, 404, 406, 502) nicht dafür identifiziert ist, dass sie zum Empfangen der Nutzlastdaten (206) gewählt ist;
Erzeugen durch die zweite Verteilvorrichtung (106b-i) einer dritten Datennachricht (302a-f), die die Nutzlastdaten (206) und einen dritten Kopfteil (304a-c, 402, 404, 406, 502) umfasst, wobei der dritte Kopfteil die erste, die zweite und die dritte Verteilvorrichtung (106, 106a-i) dafür identifiziert, dass sie zum Empfangen der Nutzlastdaten (206) gewählt ist; und
Senden durch die zweite Verteilvorrichtung (106b-i) der dritten Datennachricht (302a-f) zur dritten Verteilvorrichtung (106b-i) mittels des Maschennetzes (112); und/oder
B. Bestimmen durch die zweite Verteilvorrichtung (106b-i), dass eine dritte Verteilvorrichtung (106b-i) im zweiten Kopfteil (304a-c, 402, 404, 406, 502) dafür identifiziert ist, dass sie zum Empfangen der Nutzlastdaten (206) gewählt ist; und
Ausschließen durch die zweite Verteilvorrichtung (106b-i) der dritten Verteilvorrichtung (106b-i) von einer Liste von Empfängerverteilvorrichtungen (106b-i) für die Nutzlastdaten (206) auf der Grundlage davon, dass der zweite Kopfteil (304a-c, 402, 404, 406, 502) die dritte Verteilvorrichtung (106b-i) dafür identifiziert, dass sie zum Empfangen der Nutzlastdaten (206) gewählt ist.

14. Verfahren nach Anspruch 10, das ferner Folgendes umfasst:
Identifizieren durch die zweite Verteilvorrichtung (106b-i) einer dritten Verteilvorrichtung (106b-i), die eine benachbarte Vorrichtung der zweiten Verteilvorrichtung (106b-i) ist;
Bestimmen durch die zweite Verteilvorrichtung (106b-i), dass ein Hinzufügen einer Kennung für die dritte Verteilvorrichtung (106b-i) zum zweiten Kopfteil (304a-c, 402, 404, 406, 502) bewirken würde, dass eine Größe des zweiten Kopfteils eine Höchstkopfteilgröße überschreitet; und
Bestimmen durch die zweite Verteilvorrichtung (106b-i), dass die Nutzlast (206) nicht zur dritten Verteilvorrichtung (106b-i) übertragen werden soll, auf der Grundlage des Bestimmens, dass das Hinzufügen der Kennung zum zweiten Kopfteil (304a-c, 402, 404, 406, 502) bewirken würde, dass eine Größe des zweiten Kopfteils eine Höchstkopfteilgröße überschreitet.

15. Verfahren nach Anspruch 14, das ferner Folgendes umfasst:
Bestimmen durch eine Steuereinheit (104), dass die dritte Verteilvorrichtung (106b-i) die Nutzlast (206) nicht empfangen hat; und
Senden durch die Steuereinheit (104) der Nutzlastdaten (206) zur dritten Verteilvorrichtung (106b-i).

## Revendications

1. Dispositif de distribution (106, 106a-h) configuré pour une transmission de données distribuée dans un réseau maillé (112), le dispositif de distribution comprenant :
un dispositif d'interface réseau (808) configuré pour :
recevoir un message de données (204, 302a-c) comprenant un en-tête (304a-c, 402, 404, 406) et des données utiles (206), et
transmettre un message de données supplémentaire (302a-f) à un dispositif de distribution supplémentaire (106b-i) ; et
un dispositif de traitement (802) couplé au dispositif d'interface réseau, le dispositif de traitement étant configuré pour :
générer le message de données supplémentaire comprenant les données utiles et un en-tête supplémentaire (304a-c, 402, 404, 406, 502), l'en-tête supplémentaire identifiant le dispositif de distribution supplémentaire comme étant sélectionné pour recevoir les données utiles ;
**caractérisé en ce que** le dispositif de traitement est configuré pour :
déterminer que le dispositif de distribution supplémentaire est un dispositif voisin, et
déterminer que le dispositif de distribution supplémentaire n'est pas identifié dans l'en-tête comme étant sélectionné pour recevoir les données utiles.

2. Dispositif de distribution (106, 106a-h) selon la revendication 1, dans lequel la détermination que le dispositif de distribution supplémentaire (106b-i) est le dispositif voisin comprend au moins une étape parmi :
la détermination qu'un indicateur de force de signal reçu d'un signal reçu du dispositif de distribution supplémentaire dépasse un indicateur de force de signal reçu de seuil ;
la détermination qu'un pourcentage de tentatives réussies par le dispositif de distribution d'établir une liaison de communication avec le dispositif de distribution supplémentaire dépasse un pourcentage seuil ; et
la détermination que le dispositif de distribution (106, 106a-h) et le dispositif de distribution supplémentaire (106b-i) présentent un type de dispositif commun.

3. Dispositif de distribution (106, 106a-h) selon la revendication 1, dans lequel le dispositif de traitement (802) est en outre configuré pour déterminer qu'une session pour transmettre les données utiles (206) est active, dans lequel le message de données supplémentaire (302a-f) est généré sur la base du fait que la session est active.

4. Système de transmission de données distribuée dans un réseau maillé (112), le système comprenant :
un premier dispositif de distribution (106, 106a-g) comprenant :
un premier dispositif d'interface réseau (808) configuré pour recevoir un premier message de données (204, 302a-c), le premier message de données comprenant un premier en-tête (304a-c, 402, 404, 406) et des données utiles (206), et
un premier dispositif de traitement (802) configuré pour générer un deuxième message de données (302a-f), le deuxième message de données comprenant les données utiles (206) et un deuxième en-tête (304a-c, 402, 404, 406, 502),
dans lequel le premier dispositif d'interface réseau est en outre configuré pour transmettre le deuxième message de données à un deuxième dispositif de distribution (106b-h) ; et
le deuxième dispositif de distribution est couplé de manière communicative au premier dispositif de distribution, le deuxième dispositif de distribution comprenant :
un deuxième dispositif d'interface réseau (808) configuré pour recevoir le deuxième message de données,
**caractérisé en ce que** le premier dispositif de traitement (802) est configuré pour :
déterminer que le deuxième dispositif de distribution (106b-h) n'est pas identifié dans le premier en-tête (304a-c, 402, 404, 406) comme étant sélectionné pour recevoir les données utiles, et
générer le deuxième message de données (302a-f) sur la base de la détermination que le deuxième dispositif de distribution n'est pas identifié dans le premier en-tête (304a-c, 402, 404, 406) comme étant sélectionné pour recevoir les données utiles, et dans lequel le deuxième en-tête (304a-c, 402, 404, 406, 502) identifie le deuxième dispositif de distribution (106b-h) comme étant sélectionné pour recevoir les données utiles (206).

5. Système selon la revendication 4, dans lequel le deuxième dispositif de distribution (106b-h) comprend un deuxième dispositif de traitement (802) en outre configuré pour :
déterminer qu'un troisième dispositif de distribution (106c-i) est identifié dans le deuxième en-tête (304a-c, 402, 404, 406, 502) comme étant sélectionné pour recevoir les données utiles (206) ; et
sur la base du deuxième en-tête, identifier le troisième dispositif de distribution comme étant sélectionné pour recevoir les données utiles, en excluant le troisième dispositif de distribution (106ci) d'une liste de dispositifs de distribution destinataires pour les données utiles (206).

6. Système selon la revendication 4, dans lequel le premier dispositif de traitement (802) est en outre configuré pour déterminer que le deuxième dispositif de distribution (106b-h) est un dispositif voisin du premier dispositif de distribution (106, 106a-g), dans lequel le deuxième message de données (302a-f) est généré sur la base du fait que le deuxième dispositif de distribution (106b-h) est le dispositif voisin.

7. Système selon la revendication 6, dans lequel la détermination que le deuxième dispositif de distribution (106b-h) est le dispositif voisin comprend :
l'identification d'un indicateur de force de signal reçu pour un message précédent reçu par le premier dispositif d'interface réseau (808) depuis le deuxième dispositif d'interface réseau (808) et la détermination que l'indicateur de force de signal reçu dépasse un indicateur de force de signal reçu de seuil ;
ou
la détermination qu'un pourcentage de tentatives réussies par le premier dispositif de distribution (106, 106a-g) d'établir une liaison de communication avec le deuxième dispositif de distribution (106b-h) dépasse un pourcentage seuil ;
ou
la détermination que le premier dispositif de distribution (106, 106a-g) et le deuxième dispositif de distribution (106b-h) présentent un type de dispositif commun.

8. Système selon la revendication 4, comprenant en outre une unité de commande (104) couplée de manière communicative au premier dispositif de distribution (106, 106a-g), l'unité de commande étant configurée pour :
recevoir des données à fournir à une pluralité de dispositifs de distribution (106, 106a-i) comprenant les premier, deuxième et troisième dispositifs de distribution pendant une première session ;
partitionner des données en données utiles (206) et données utiles supplémentaires (206) ;
transmettre les données utiles (206) pour une transmission par l'intermédiaire de la pluralité de dispositifs de distribution (106, 106a-i) ; et
transmettre les données utiles supplémentaires (206) pour une transmission par l'intermédiaire de la pluralité de dispositifs de distribution (106, 106a-i) pendant une deuxième session.

9. Système selon la revendication 8, dans lequel l'unité de commande (104) est en outre configurée pour :
déterminer que les données utiles (206) et/ou les données utiles supplémentaires (206) n'ont pas été reçues par au moins un dispositif de distribution de la pluralité de dispositifs de distribution (106, 106a-i) pendant une session respective de la première session et de la deuxième session ; et
retransmettre les données utiles (206) et/ou les données utiles supplémentaires (206) audit au moins un dispositif de distribution.

10. Procédé de transmission de données distribuée dans un réseau maillé (112), le procédé comprenant les étapes consistant à :
recevoir, par un premier dispositif de distribution (106, 106a-h) dans le réseau maillé, un premier message de données (204, 302a-c) comprenant un premier en-tête (304a-c, 402, 404, 406) et des données utiles (206) ;
générer, par le premier dispositif de distribution (106, 106a-h), un deuxième message de données (302a-f) comprenant les données utiles (206) et un deuxième en-tête (304a-c, 402, 404, 406, 502), et
transmettre, par le premier dispositif de distribution (106, 106a-h), le deuxième message de données (302a-f) à un deuxième dispositif de distribution (106b-i) par l'intermédiaire du réseau maillé (112) ;
**caractérisé en ce que** le premier dispositif de distribution (106, 106a-h) détermine que le deuxième dispositif de distribution (106b-i) n'est pas identifié dans le premier en-tête (304a-c, 402, 404, 406) comme étant sélectionné pour recevoir les données utiles (206) et dans lequel le deuxième en-tête (304a-c, 402, 404, 406, 502) identifie le deuxième dispositif de distribution (106b-i) comme étant sélectionné pour recevoir les données utiles (206).

11. Procédé selon la revendication 10, comprenant en outre la détermination, par le premier dispositif de distribution (106, 106a-h), que le deuxième dispositif de distribution (106b-i) est un dispositif voisin, dans lequel le deuxième message de données (302a-f) est généré sur la base du fait que le deuxième dispositif de distribution (106b-i) est le dispositif voisin.

12. Procédé selon la revendication 11, dans lequel la détermination que le deuxième dispositif de distribution (106b-h) est le dispositif voisin comprend :
l'identification, par le premier dispositif de distribution (106, 106a-h), d'un indicateur de force de signal reçu pour un message précédent reçu depuis le deuxième dispositif de distribution (106b-i) ; et la détermination, par le premier dispositif de distribution, que l'indicateur de force de signal reçu dépasse un indicateur de force de signal reçu de seuil ;
ou
l'identification, par le premier dispositif de distribution (106, 106a-h), qu'un pourcentage de tentatives réussies par le premier dispositif de distribution d'établir une liaison de communication avec le deuxième dispositif de distribution (106b-i) dépasse un pourcentage seuil ;
ou
la détermination, par le premier dispositif de distribution (106, 106a-h), que le premier dispositif de distribution et le deuxième dispositif de distribution (106b-i) présentent un type de dispositif commun.

13. Procédé selon la revendication 10, comprenant en outre :
A. la détermination, par le deuxième dispositif de distribution (106b-i), qu'un troisième dispositif de distribution (106b-i) n'est pas identifié dans le deuxième en-tête (304a-c, 402, 404, 406, 502) comme étant sélectionné pour recevoir les données utiles (206) ;
la génération, par le deuxième dispositif de distribution (106b-i), d'un troisième message de données (302a-f) comprenant les données utiles (206) et un troisième en-tête (304a-c, 402, 404, 406, 502), dans lequel le troisième en-tête identifie les premier, deuxième et troisième dispositifs de distribution (106, 106a-i) comme étant sélectionnés pour recevoir les données utiles (206) ;
la transmission, par le deuxième dispositif de distribution (106b-i), du troisième message de données (302a-f) au troisième dispositif de distribution (106b-i) par l'intermédiaire du réseau maillé (112) ;
et/ou
B. la détermination, par le deuxième dispositif de distribution (106b-i), qu'un troisième dispositif de distribution (106b-i) est identifié dans le deuxième en-tête (304a-c, 402, 404, 406, 502) comme étant sélectionné pour recevoir les données utiles (206) ; et
l'exclusion, par le deuxième dispositif de distribution (106b-i), du troisième dispositif de distribution (106b-i) d'une liste de dispositifs de distribution destinataires (106b-i) pour les données utiles (206) sur la base du fait que le deuxième en-tête (304a-c, 402, 404, 406, 502) identifie le troisième dispositif de distribution (106b-i) comme étant sélectionné pour recevoir les données utiles (206) .

14. Procédé selon la revendication 10, comprenant en outre les étapes consistant à :
identifier, par le deuxième dispositif de distribution (106b-i), un troisième dispositif de distribution (106b-i) qui est un dispositif voisin du deuxième dispositif de distribution (106b-i) ;
déterminer, par le deuxième dispositif de distribution (106b-i), que l'ajout d'un identifiant pour le troisième dispositif de distribution (106b-i) au deuxième en-tête (304a-c, 402, 404, 406, 502) amènerait une taille du deuxième en-tête à dépasser une taille d'en-tête maximale ; et
déterminer, par le deuxième dispositif de distribution (106b-i), que les données utiles (206) ne sont pas à transmettre au troisième dispositif de distribution (106b-i) sur la base de la détermination que l'ajout de l'identifiant au deuxième en-tête (304a-c, 402, 404, 406, 502) amènerait une taille du deuxième en-tête à dépasser la taille d'en-tête maximale.

15. Procédé selon la revendication 14, comprenant en outre les étapes consistant à :
déterminer, par une unité de commande (104), que le troisième dispositif de distribution (106b-i) n'a pas reçu les données utiles (206) ; et
transmettre, par l'unité de commande (104), les données utiles (206) au troisième dispositif de distribution (106b-i).
